(19) Europäisches Patentamt
European Patent Office
Office européen des brevets

(11) **EP 2 770 010 B1**

(12) **EUROPÄISCHE PATENTSCHRIFT**

(45) Veröffentlichungstag und Bekanntmachung des Hinweises auf die Patenterteilung:
**01.06.2016 Patentblatt 2016/22**

(51) Int Cl.:
***C08G 65/00*** *(2006.01)* ***C08G 65/30*** *(2006.01)*

(21) Anmeldenummer: **14156020.1**

(22) Anmeldetag: **20.02.2014**

(54) **VERFAHREN ZUR HERSTELLUNG VON POLYETHERPOLYOLEN**

METHOD FOR MANUFACTURING POLYETHER POLYOLS

PROCÉDÉ DESTINÉ À LA FABRICATION DE POLYOLS DE POLYÉTHER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.02.2013 EP 13156351**

(43) Veröffentlichungstag der Anmeldung:
**27.08.2014 Patentblatt 2014/35**

(73) Patentinhaber: **Covestro Deutschland AG
51373 Leverkusen (DE)**

(72) Erfinder:
• **Lorenz, Klaus
41539 Dormagen (DE)**
• **Eichmann, Marcus
40547 Düsseldorf (DE)**

(74) Vertreter: **Levpat
c/o Covestro AG
Alfred-Nobel-Straße 10
40789 Monheim am Rhein (DE)**

(56) Entgegenhaltungen:
**EP-A2- 0 618 251       US-A- 2 902 478
US-A- 3 190 927       US-A- 4 430 490**

EP 2 770 010 B1

**Beschreibung**

Die vorliegende Erfindung betrifft ein Verfahren zur Herstellung von Polyetherpolyolen durch basenkatalysierte Addition von Alkylenoxiden (Epoxiden) an bei Raumtemperatur feste Starterverbindungen mit Zerewitinoff-aktiven Wasserstoffatomen.

Polyetherpolyole basierend auf hochfunktionellen, bei Raumtemperatur festen Starterverbindungen, wie beispielsweise Zuckern, Oligo- und Polysacchariden, Zuckeralkoholen (wie beispielsweise Mannit oder Sorbit) sowie Pentaerythrit, werden in der Regel mit mehrfunktionellen Isocyanaten zu Polyurethanen umgesetzt, wobei gleichermaßen geschäumte oder massive Polyurethanwerkstoffe erhalten werden können. Spezielle Anforderungen an die Werkstoffmechanik, die Entflammbarkeit, das Durchhärteverhalten der Reaktionskomponenten oder die Hydrophilie bzw. die Hydrophobie des Werkstoffs werden in der Regel über die Struktur des Polyetherpolyols und dort wiederum durch die Wahl der Starterverbindung(en) und die Zusammensetzung der addierten Alkylenoxide erfüllt. Die Alkylenoxide können im Gemisch oder einzeln nacheinander, also blockweise, dosiert werden. Hierbei ist besonders der Einsatz von Ethylenoxid als Reinblock oder der Einsatz von hoch ethylenoxidhaltigen Blöcken neben solchen aus höheren Alkylenoxiden, wie beispielsweise Propylenoxid, hervorzuheben, da sich hiermit nicht nur Polyurethanwerkstoffe mit erhöhter Hydrophilie sondern, sofern das Ethylenoxid als Endblock eindosiert wurde, auch Polyetherpolyole mit einem erhöhten Anteil an primären Endgruppen erhalten lassen, welche dem Polyetherpolyol eine erhöhte Reaktivität gegenüber Isocyanaten verleihen.

Bei Raumtemperatur feste Starterverbindungen können Alkylenoxidadditionsreaktionen einfach zugänglich gemacht werden, indem die Alkylenoxidaddition in Gegenwart von gegenüber Alkylenoxiden unreaktiven Lösungsmitteln durchgeführt wird, wie beispielsweise in US 4,332,936 beschrieben. Im Allgemeinen ist allerdings aus Gründen der Nachhaltigkeit und Produkthygiene die Verwendung von organischen Lösungsmitteln nicht erwünscht. Weiterhin muss hierbei wertvolles Reaktorvolumen für das Lösungsmittel zur Verfügung gestellt werden.

Es können als Suspensionshilfen für die festen Starterverbindungen auch bei Raumtemperatur flüssige Starterverbindungen und / oder deren Alkylenoxidadditionsprodukte verwendet werden. Werden hierbei die Alkylenoxidadditionsprodukte von bei Raumtemperatur festen Starterverbindungen eingesetzt, lassen sich im Prinzip auch ausschließlich auf hochschmelzenden Starterverbindungen basierende Polyetherpolyole lösungsmittelfrei erhalten. Solche Verfahren werden beispielsweise in FR-A 1285708 und US 3,190,927 beschrieben. Allerdings zeigen die Endprodukte häufig ein unzureichendes Lösungsvermögen für bei Raumtemperatur feste Starterverbindungen und es wird auch in diesem Fall, wie bei dem Einsatz von Lösungsmitteln, ein entsprechendes Reaktorvolumen für das Suspensionsmittel benötigt.

Wird Wasser als Suspendierungs- / Lösungsmittel für die bei Reaktionsbedingungen festen Starterverbindungen eingesetzt, so kann die Alkylenoxidadditionsreaktion an geeigneter Stelle unterbrochen werden und das überschüssige Wasser durch Destillation abgetrennt werden. Solche Vorgehensweisen sind beschrieben in DE-A-1443022 und US-4,430,490. Allerdings enstehen hierbei Endprodukte mit niedrigeren Funktionalitäten durch die anteilige Reaktion des als Suspendierungs- und Lösungsmittel verwendeten Wassers bei der Alkylenoxidaddition. Weiterhin ist die Reaktion bei diesen so genannten Wasserverfahren weniger gut kontrollierbar als bei der Verwendung anderer Costarter. Die entstehenden glykolhaltigen Abwässer müssen entweder aufgereinigt werden oder deren Glykolgehalt bei Rückführung in den Prozess auf einen konstanten Wert eingestellt werden. Ebenso bedeutet die zwischenzeitliche Abdestillation des unreagierten Wassers einen zusätzlichen Zeit- und Energieaufwand.

Es wäre daher wünschenswert die Alkylenoxidadditionsreaktion möglichst in Abwesenheit von gegenüber Alkylenoxiden unreaktiven Lösungsmitteln und anderen Suspendierhilfen bei den für basenkatalysierte Alkylenoxidadditionsreaktionen üblichen angewandten Reaktionstemperaturen von 70 bis 180 °C durchzuführen. Bei der Herstellung von blockweise aufgebauten Polyetherpolyolen mit reinen Ethylenoxidblöcken, bzw. solchen mit einem hohen Anteil an Oxyethyleneinheiten von größer oder gleich 75 Gew.-%, erweist es sich in Abwesenheit von Lösungsmitteln jedoch als schwierig klare und homogene Endprodukte ausgehend von festen Starterverbindungen zu erhalten.

Die im Stand der Technik offenbarten Verfahren bieten für die geschilderten Probleme mit bei Raumtemperatur festen Startern, insbesondere bei blockweise aufgebauten Polyetherpolyolen mit einem Gesamtgehalt an Oxyethyleneinheiten zwischen 5 und 90 Gew.-% bezogen auf die Masse aller Oxyalkyleneinheiten, keine befriedigende Lösung.

Aufgabe der vorliegenden Erfindung war es daher ein Verfahren zur Herstellung von Polyetherpolyolen auf Basis von bei Raumtemperatur festen Starterverbindungen zu finden, wobei die erhaltenen Polyetherpolyole aus Blöcken mit einem Gehalt an Oxyethyleneinheiten von größer oder gleich 75 Gew.-%, neben anderen aus mindestens 60 % Propylenoxid und maximal 40 Gew.-% Ethylenoxid zusammengesetzten Blöcken, aufgebaut sind und einen Gesamtgehalt an Oxyethyleneinheiten zwischen 5 und 90 Gew.-% bezogen auf die Masse aller Oxyalkyleneinheiten haben. Der Einsatz von Lösungsmitteln und größeren Mengen von bei Raumtemperatur flüssigen Costartern sollte hierbei vermieden werden und es sollten im Ergebnis keine Trübungen sowie Inhomogenitäten in den Endprodukten auftreten.

Überraschenderweise konnte die Aufgabe gelöst werden durch ein Verfahren gemäß Anspruch 1 zur Herstellung von Polyetherpolyolen auf Basis von Starterverbindungen mit Zerewitinoff-aktiven Wasserstoffatomen, mit n Blöcken

$E_n$, jeweils umfassend wenigstens 75 Gew.-% Oxyethyleneinheiten, und m Blöcken $P_m$, jeweils umfassend wenigstens 60 Gew.-% Oxypropyleneinheiten, mit n und m als natürlichen Zahlen von 1 bis 10, wobei bei dem Verfahren wenigstens eine Starterverbindung mit zumindest einem Zerewitinoff-aktiven Wasserstoffatom unter Zusatz eines basischen Katalysators mit Ethylenoxid und Propylenoxid umgesetzt wird, wobei keine Lösungsmittel verwendet werden, und die wenigstens eine Starterverbindung einen Schmelzpunkt von $\geq 40\,°C$ aufweist, dadurch gekennzeichnet, dass die Umsetzung mit Propylenoxid während der Dosierung des Blockes oder der Blöcke $P_m$ unter den Bedingungen der folgenden Ungleichung erfolgt:

$$\frac{x_m(PO)}{x(OH) * t_m(PO) * OHZ} < 0{,}006$$

$$\text{in } [g/(h*\{mg\ KOH\})] \quad (1)$$

wobei

$x_m(PO)$, als die eindosierte Stoffmenge an Propylenoxid für den Block $P_m$ in mol,
$x(OH)$, als die Stoffmenge an Hydroxygruppen im Polyetherpolyol in mol,
$t_m(PO)$, als die Dosierzeit für das Propylenoxid des Blocks $P_m$ in Stunden,
OHZ, als die berechnete OH-Zahl des Polyetherpolyols in mg KOH/g, und
m wie vorstehend

definiert sind,
und wobei der Gesamtgehalt an Oxyethyleneinheiten im Polyetherpolyol, bezogen auf die Gesamtmasse der eindosierten Alkylenoxide, von 5 bis 90 Gew.-% beträgt.

Die Stoffmenge an Hydroxygruppen im Polyetherpolyol (x(OH)) berechnet sich gemäß Gleichung (2):

$$\frac{\sum_i^l (m_i * (OHZ)_i)}{56100} = x(OH) \quad (2)$$

mit:

$m_i$: Masse der Starterkomponente i in g
$(OHZ)_i$: OH-Zahl der Starterkomponente i
$l$: Anzahl der eingesetzten Starterverbindungen

Die OH-Zahl steht in der in Gleichung (3) in allgemeiner Form wiedergegebenen Beziehung zur Äquivalentmolmasse. Unter Äquivalentmolmasse ist die durch die Zahl der aktiven Wasserstoffatome (Funktionalität) geteilte zahlenmittlere Gesamtmolmasse des aktive Wasserstoffatome enthaltenden Materials zu verstehen.

$$\text{OH-Zahl [mg KOH/g]} = 56100\ [\text{mg KOH / mol}] / \text{Äquivalentmolmasse [g / mol]} \quad (3)$$

Die berechneten OH-Zahlen der nach dem erfindungsgemäßen Verfahren erhältlichen Polyetherpolyole weisen bevorzugt Werte von 50 mg KOH/g bis 400 mg KOH/g, besonders bevorzugt von 80 mg KOH/g bis 300 mg KOH/g, ganz besonders bevorzugt von 95 mg KOH/g bis 220 mg KOH/g, auf.
Die Verwendung des Worts *ein* im Zusammenhang mit zählbaren Größen ist hierbei und im Folgenden nur dann als Zahlwort zu verstehen, wenn dies aus dem Zusammenhang hervorgeht (bspw. durch die Formulierung *"genau ein"*). Ansonsten umfassen Ausdrücke wie "ein Epoxid", "eine Starterverbindung" etc. immer auch solche Ausführungsformen, in denen zwei oder mehr Epoxide, zwei oder mehr Starterverbindungen etc. eingesetzt werden.
Das erfindungsgemäße Verfahren ermöglicht, dass bei Raumtemperatur feste Starterverbindungen mit Alkylenoxiden zu Polyetherpolyolen umgesetzt werden können, ohne dass hierbei der Einsatz von Lösungsmitteln, Costartern oder anderen Suspensionshilfen erforderlich ist. Dies ist sowohl unter wirtschaftlichen als auch unter prozesstechnischen Gesichtspunkten von Vorteil, da hierdurch zusätzliche Prozess- und Aufarbeitungsschritte entfallen, als auch allgemein erstrebenswert für die Entwicklung von nachhaltigen und ressourcenschonenden Prozessen. Das erfindungsgemäße Verfahren ermöglicht es, dass ohne den Einsatz von Lösungsmitteln im Ergebnis klare und homogene Alkylenoxidadditionsprodukte auf Basis der bei Raumtemperatur festen Starterverbindungen erhalten werden, welche als Komponenten von Polyurethanwerkstoffen mit Polyisocyanaten vielfältig eingesetzt werden können.

Unter Starterverbindungen im Sinne der Erfindung werden Verbindungen verstanden, die mindestens ein Zerewitinoff-aktives Wasserstoffatom aufweisen. An N, O oder S gebundener Wasserstoff wird als Zerewitinoff-aktiver Wasserstoff (oder als "aktiver Wasserstoff") bezeichnet, wenn er nach einem von Zerewitinoff aufgefundenen Verfahren durch Umsetzung mit Methylmagnesiumiodid Methan liefert. Typische Beispiele für Verbindungen mit Zerewitinoffaktivem Wasserstoff sind Verbindungen die Carboxyl-, Hydroxyl-, Amino-, Imino- oder Thiol-Gruppen als funktionelle Gruppen enthalten.

Unter bei Raumtemperatur festen Starterverbindungen werden solche Starterverbindungen verstanden, deren Schmelzpunkte bei 40 °C oder höher liegen und unter flüssigen Starterverbindungen solche mit Schmelzpunkten kleiner als 40 °C.

Nachfolgend wird die Erfindung im Detail erläutert. Verschiedene Ausführungsformen sind dabei beliebig miteinander kombinierbar, solange sich für den Fachmann aus dem Kontext nicht eindeutig das Gegenteil ergibt.

Bei den Starterverbindungen handelt es sich erfindungsgemäß bevorzugt um feste Starterverbindungen, welche bei ≤ 40 °C in fester Form vorliegen. Beispiele hierfür sind Mono-, Oligo- und Polysaccharide, Pentaerythrit, Dipentaerythrit, Tripentaerythrit, Trimethylolethan, Trimethylolpropan, Sorbit, 1,12-Dodecandiol, 1,2-Decandiol, 1,10-Decandiol, cyclische Polyole (wie beispielsweise Inosit), aromatische Hydroxyverbindungen (wie beispielsweise Phenol, Hydrochinon, Brenzcatechin, Resorcin, 1,3,5-Trihydroxybenzol, Bisphenol-A oder Bisphenol-F), methylolgruppenhaltige Kondensate aus Formaldehyd und Phenol oder Melamin oder Harnstoff, Mannichbasen, hochfunktionelle Starterverbindungen auf Basis hydrierter Stärkehydrolyseprodukte, Polyamine (wie beispielsweise Verbindungen auf Basis hochfunktioneller mehrkerniger Anilin / Formaldehyd - Kondensationsprodukte ("polymeres MDA") und Isomere bzw. Isomerengemische des Toluylendiamins (insbesondere 2,4-TDA, 2,6-TDA, 2,3-TDA, 3,4-TDA)). Es können auch Verbindungen mit Carbonsäuregruppen (wie beispielsweise Malonsäure, Glutarsäure oder Adipinsäure) oder Verbindungen mit Hydroxy- und Carbonsäurefunktionen (wie beispielsweise die Isomere der Hydroxybenzoesäure, die Isomere der Hydroxymethylbenzoesäure, die Isomere der Dihydroxybenzoesäure, die Isomere der Trihydroxybenzoesäure, Mandelsäure, Äpfelsäure, Citronensäure, Weinsäure und Schleimsäure) verwendet werden. Bevorzugt werden als Starterverbindungen Pentaerythrit, Saccharose, Trimethylolpropan und / oder Sorbit eingesetzt, besonders bevorzugt wird Sorbit eingesetzt.

Die erfindungsgemäß einzusetzenden Starterverbindungen können auch als Gemische eingesetzt werden. Gemeinsam mit den festen Starterverbindungen können erfindungsgemäß in kleinen Mengen, bis zu 30 Gew.-%, bezogen auf die Gesamtmasse aller Starterverbindungen, auch solche mit Schmelzpunkten niedriger als 40 °C eingesetzt werden.

Die erfindungsgemäß zu verwendenden Starterverbindungen liegen bei 40 °C in fester Form vor. Um ihre Handhabung zu erleichtern können die Starterverbindungen in Form einer wässrigen Lösung eingesetzt werden und vor Beginn der eigentlichen Alkylenoxidadditionsreaktion, bzw. nach Unterbrechung einer bereits laufenden Alkylenoxidadditionsreaktion, beispielsweise durch einen Strippschritt, entwässert werden. In einer bevorzugten Ausführungsform des erfindungsgemäßen Verfahrens werden bei der Umsetzung der Starterverbindung mit Ethylenoxid und Propylenoxid sowie gegebenenfalls weiteren Alkylenoxidverbindungen keine Lösungsmittel verwendet.

Für das erfindungsgemäße Verfahren geeignete Alkylenoxide sind neben Ethylenoxid und Propylenoxid beispielsweise 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid und Pinenoxid. Bevorzugt werden im erfindungsgemäßen Verfahren Ethylenoxid und Propylenoxid eingesetzt.

Die nach dem erfindungsgemäßen Verfahren hergestellten Polyetherpolyole weisen Blockstrukturen auf mit mindestens einem Block $E_n$ und mindestens einem Block $P_m$. Der oder die nach dem erfindungsgemäßen Verfahren zu dosierenden an Oxyethyleneinheiten reichen Blöcke $E_n$ mit einem Gehalt an Oxyethyleneinheiten von mindestens 75 Gew.-% können als innere Blöcke oder als Endblock dosiert werden. Bevorzugt enthalten die nach dem erfindungsgemäßen Verfahren hergestellten Polyetherpolyole einen Block $E_n$ als Endblock, da Produkte mit an Oxyethyleneinheiten reichen Endblöcken durch einen erhöhten Anteil an primären Endgruppen gekennzeichnet sind, welche den Polyetherpolyolen eine erhöhte Reaktivität gegenüber Isocyanaten verleihen. Vorzugsweise enthält mindestens ein Block $E_n$ wenigstens 90 Gew.-% Oxyethyleneinheiten, besonders bevorzugt enthält mindestens ein Block $E_n$ 100 Gew.-% Oxyethyleneinheiten. Der Gesamtgehalt an Oxyethyleneinheiten in nach dem erfindungsgemäßen Verfahren hergestellten Polyetherpolyolen, beträgt, bezogen auf die Gesamtmasse der eindosierten Alkylenoxide, von 5 bis 90 Gew.-%. Bevorzugt enthält das nach dem erfindungsgemäßen Verfahren hergestellte Polyetherpolyol bis zu 85 Gew.-% Oxyethyleneinheiten bezogen auf die Gesamtmasse der eindosierten Alkylenoxide. Vorzugsweise enthalten der oder die Blöcke $P_m$ wenigstens 60 Gew.-% Oxypropyleneinheiten, besonders bevorzugt wenigstens 75 Gew.-% Oxypropyleneinheiten, bezogen auf die Gesamtmasse der für diesen oder diese Blöcke eindosierten Alkylenoxide. In einer bevorzugten Ausführungsform der Erfindung bestehen die nach dem erfindungsgemäßen Verfahren hergestellten Polyetherpolyole neben den auf die Starter zurückgehenden Struktureinheiten ausschließlich aus den Blöcken $E_n$ und $P_m$. Die nach dem erfindungsgemäßen Verfahren hergestellten Polyetherpolyole sind also Blockcopolymere, aufgebaut aus an Oxyethyleneinheiten reichen Blöcken $E_n$ und aus an Oxypropyleneinheiten reichen Blöcken $P_m$.

Wechsel der Blockzusammensetzung können während der Epoxiddosierphase diskontinuierlich oder auch, innerhalb kurzer Zeiträume, kontinuierlich vollzogen werden.

Im erfindungsgemäßen Verfahren werden basische Katalysatoren wie beispielsweise Alkalimetallhydride, Alkalimetallcarboxylate (beispielsweise von monofunktionellen Carbonsäuren), Alkalimetallhydroxide, Alkalimetallalkoxide (beispielsweise von monofunktionellen Alkoholen) oder Amine eingesetzt. Eine Übersicht über für das erfindungsgemäße Verfahren geeignete Amine ist von M. Ionescu et al. in "Advances in Urethanes Science and Technology", 1998, 14, S. 151-218 gegeben worden. Beispielsweise können N,N-Dimethylbenzylamin, Dimethylaminopropanol, N-Methyldiethanolamin, Trimethylamin, Triethylamin, N,N-Dimethylcyclohexylamin, N-Methylpyrrolidin, N,N,N',N'-Tetramethylethylendiamin, Diazabicyclo[2,2,2]-octan, 1,4-Dimethylpiperazin, N-Methylmorpholin, unsubstituiertes Imidazol und / oder alkylsubstituierte Imidazolderivate eingesetzt werden. Bevorzugt werden im erfindungsgemäßen Verfahren als basische Katalysatoren Alkalimetallhydroxide (wie beispielsweise Natriumhydroxid, Kaliumhydroxid oder Cäsiumhydroxid), Alkalimetallalkoholate mono- oder mehrfunktioneller Alkohole, Imidazol oder alkylsubstituierte Imidazolderivate (wie beispielsweise N-Methylimidazol) eingesetzt. Besonders bevorzugt werden im erfindungsgemäßen Verfahren Alkalimetallhydroxide und unter diesen ganz besonders bevorzugt Kaliumhydroxid eingesetzt.

Die Alkalimetallhydroxide können den bei Raumtemperatur festen Starterverbindungen als Feststoff oder als hochkonzentrierte wässrige Lösungen zugeführt werden. Durch einen der Alkylenoxiddosierphase vorgeschalteten Strippschritt können Lösungswasser und das Wasser, welches durch die Reaktion der Alkalimetallhydroxide mit den Zerewitinoff-aktiven Wasserstoffatomen der Starterverbindung entsteht, abgetrennt werden. Werden bei Alkalimetallhydroxidkatalyse wässrige Lösungen von bei Raumtemperatur festen Starterverbindungen eingesetzt, wird zweckmäßigerweise nur ein Strippschritt durchgeführt, also beispielsweise vor Beginn der eigentlichen Alkylenoxidadditionsphase oder, weniger bevorzugt, nach Unterbrechung einer bereits laufenden Alkylenoxidadditionsreaktion.

Die basischen Katalysatoren werden im Allgemeinen in auf die Endproduktmenge bezogenen Mengen von 0,004 bis 1,0 Gew.-%, bevorzugt 0,05 bis 1,0 Gew.-% eingesetzt.

Bisweilen erweist es sich als vorteilhaft die Menge an Katalysator erst nach Dosierung einer Teilmenge der insgesamt zu dosierenden Alkylenoxidmenge auf die für die für die Durchführung der Alkylenoxidaddition erforderliche Endkonzentration einzustellen. Hierbei erneut eingetragenes Wasser und / oder durch die Reaktion der Alkalimetallhydroxide mit den Zerewitinoff-aktiven Wasserstoffen der Starterverbindung erneut entstehendes Wasser wird vorzugsweise vor Wiederaufnahme der Alkylenoxidaddition abgetrennt.

Vorzugsweise erfolgt die Umsetzung der wenigstens einen Starterverbindung mit Ethylenoxid und Propylenoxid bei einer Temperatur von 70 bis 170°C, besonders bevorzugt bei einer Temperatur von 100 bis 160°C. Die Temperatur kann während der Alkylenoxiddosierphase innerhalb der beschriebenen Grenzen variiert werden.

Um eine optimale Abstimmung zwischen hohem Alkylenoxidumsatz und geringer Nebenproduktbildung bei Verwendung empfindlicher Starterverbindungen (wie beispielsweise Saccharose) zu erreichen, kann zunächst bei niedrigen Reaktionstemperaturen (beispielsweise bei 70 bis 110°C) alkoxyliert werden, und erst bei hinreichendem Starterumsatz (beispielsweise sobald mindestens 50 Gew.-% der eingesetzten Starterverbindungen an mindestens einem Zerewitinoff-aktiven Wasserstoffatom mit Alkylenoxid reagiert haben) zu höheren Reaktionstemperaturen (beispielsweise auf 110 bis 130 °C) übergegangen werden.

Werden langkettige Polyetherpolyole, d. h. Polyetherpolyole mit Äquivalentmolmassen von größer 500 Da hergestellt, so wird empfohlen bei Erreichen von hohen Äquivalentmolmassen und bei Dosierung propylenoxidhaltiger Blöcke, beispielsweise bei 500 Da oder höheren Äquivalentmolmassen, die Reaktionstemperatur auf Werte von 120 °C, bevorzugt 110 °C oder niedriger, zu beschränken, um Nebenreaktionen des Propylenoxids, insbesondere seine Umlagerung in Allylalkohol auf ein tolerierbares Maß zu reduzieren. Das Ausmaß dieser Nebenreaktion nimmt naturgemäß mit dem Gehalt an Propylenoxid im dosierten Alkylenoxidgemisch zu, daher wird die Beschränkung der Reaktionstemperatur dann empfohlen, wenn der Propylenoxidgehalt im dosierten Alkylenoxidgemisch Werte von 30 Gew.-% überschreitet, insbesondere wenn er Werte von 50 Gew.-% oder gar 70 Gew.-% überschreitet. Die Dosierung hoch ethylenoxidhaltiger Blöcke oder von Blöcken aus reinem Ethylenoxid sowie Nachreaktionen können wiederum bei höheren Temperaturen (d.h. nach Anhebung der Temperatur auf 100 bis 170 °C, bevorzugt 100 bis 150 °C) durchgeführt werden. Die Temperatur der exothermen Alkylenoxidadditionsreaktion muss gegebenenfalls durch Kühlung auf dem gewünschten Niveau gehalten werden. Gemäß dem Stand der Technik zur Auslegung von Polymerisationsreaktoren für exotherme Reaktionen (z. B. Ullmann's Encyclopedia of Industrial Chemistry, Band B4, Seite 167ff, 5. Ausgabe, 1992) erfolgt eine solche Kühlung im Allgemeinen über die Reaktorwand (z. B. Doppelmantel, Halbrohrschlange) sowie mittels weiterer intern im Reaktor und/oder extern im Umpumpkreislauf angeordneter Wärmetauscherflächen, z.B. an Kühlschlangen, Kühlkerzen, Platten-, Rohrbündel- oder Mischerwärmetauschern. Diese sollten vorteilhafterweise so ausgelegt sein, dass auch zu Beginn der Dosierphase, d. h. bei kleinem Füllstand, und in Gegenwart eines heterogenen Reaktorinhalts (beispielsweise bei Vorliegen von Feststoffdispersionen) effektiv gekühlt werden kann.

Generell ist in allen Reaktionsphasen durch Auslegung und Einsatz handelsüblicher Rührorgane für eine gute Durchmischung des Reaktorinhaltes zu sorgen, wobei hier insbesondere ein- oder mehrstufig angeordnete Rührer oder großflächig über die Füllhöhe wirkende Rührertypen geeignet sind (siehe z.B. Handbuch Apparate; Vulkan-Verlag Essen, 1. Aufl. (1990), S.188 - 208). Technisch besonders relevant ist hierbei eine im Mittel über den gesamten Reaktorinhalt eingetragene volumenspezifische Mischleistung, die im Allgemeinen im Bereich von 0,2 W/L bis 5 W/L, bezogen auf das Reaktorvolumen, liegt, mit entsprechend höheren lokalen Leistungseinträgen im Bereich der Rührorgane selbst und gegebenenfalls bei niedrigeren Füllständen. Um eine optimale Rührwirkung zu erzielen, können im Reaktor gemäß allgemeinem Stand der Technik eine Kombinationen aus Stromstörern (beispielsweise Flach- oder Rohrstromstörer) und Kühlschlangen (oder Kühlkerzen) angeordnet werden, die sich auch über den Behälterboden erstrecken können. Die Rührleistung des Mischaggregates kann während der Dosierphase auch füllstandsabhängig variiert werden, um in kritischen Reaktionsphasen einen besonders hohen Leistungseintrag zu gewährleisten. Beispielsweise kann es vorteilhaft sein, feststoffhaltige Dispersionen, die zu Reaktionsbeginn bei der (Mit-)Verwendung von Saccharose vorliegen können, oder viskose Schmelzen von bei Raumtemperatur festen Startern, besonders intensiv zu durchmischen. Außerdem ist beim Einsatz fester Starter durch die Wahl des Rühraggregates sicherzustellen, dass eine ausreichende Dispergierung des Feststoffes im Reaktionsgemisch gewährleistet ist. Bevorzugt werden hier bodengängige Rührstufen sowie besonders zur Suspendierung geeignete Rührorgane eingesetzt. Ferner sollte die Rührergeometrie zur Minderung des Aufschäumens von Reaktionsprodukten beitragen. Das Aufschäumen von Reaktionsgemischen kann beispielsweise nach Ende der Dosier- und Nachreaktionsphase beobachtet werden, wenn Restalkylenoxide zusätzlich im Vakuum bei absoluten Drücken im Bereich von 1 mbar bis 500 mbar entfernt werden. Für solche Fälle haben sich Rührorgane als geeignet herausgestellt, die eine kontinuierliche Durchmischung der Flüssigkeitsoberfläche erzielen. Je nach Anforderung weist die Rührwelle ein Bodenlager und gegebenenfalls weitere Stützlager im Behälter auf. Der Antrieb der Rührerwelle kann dabei von oben oder unten erfolgen (mit zentrischer oder exzentrischer Anordnung der Welle).

Alternativ ist es auch möglich, die notwendige Durchmischung ausschließlich mittels eines über einen Wärmetauscher geführten Umpumpkreislaufs zu erzielen oder diesen zusätzlich zum Rühraggregat als weitere Mischkomponente zu betreiben, wobei der Reaktorinhalt nach Bedarf (typischerweise 1 bis 50 mal pro Stunde) umgepumpt wird. Die mittels Umpumpung, beispielsweise über einen außenliegenden Wärmetauscher über diesen oder bei Rückführung in den Reaktor über eine Düse oder Injektor, eingetragene spezifische Mischenergie beläuft sich ebenfalls auf Werte von im Mittel 0,2 bis 5 W/L, wobei diese auf das im Reaktor und den Umpumpkreislauf am Ende der Reaktionsphase befindliche Flüssigkeitsvolumen bezogen ist.

Die Alkylenoxide können dem Reaktor auf unterschiedliche Weise zugeführt werden: Möglich ist eine Dosierung in die Gasphase oder direkt in die Flüssigphase, beispielsweise über ein Tauchrohr oder einen in der Nähe des Reaktorbodens in einer gut durchmischten Zone befindlichen Verteilerring. Die kontinuierliche Dosierung des wenigstens einen Alkylenoxids erfolgt so, dass die sicherheitstechnischen Druckgrenzen des verwendeten Reaktorsystems nicht überschritten werden. Diese richten sich naturgemäß nach den im Einzelfall vorliegenden apparativen Gegebenheiten, wobei der Prozess im Allgemeinen in einem Druckbereich von 1 mbar bis 10 bar, besonders bevorzugt von 1 mbar bis 4 bar ausgeführt wird. Insbesondere bei der Dosierung von ethylenoxidhaltigen Alkylenoxidgemischen oder reinem Ethylenoxid ist vorteilhafterweise darauf zu achten, dass ein ausreichender Inertgaspartialdruck im Reaktor während der Anfahr- und Dosierphase aufrechterhalten wird. Dieser kann beispielsweise durch Edelgase oder Stickstoff eingestellt werden. Bei Dosierung in die Flüssigphase sollten die Dosieraggregate selbstleerend ausgelegt sein, beispielsweise durch Anbringen der Dosierbohrungen an der Unterseite des Verteilerrings. Generell sollte durch apparative Maßnahmen, beispielsweise durch die Montage von Rückschlagkläppen, ein Rückströmen von Reaktionsmedium in die Dosieraggregate und Eduktvorlagen verhindert werden. Wird ein Alkylenoxidgemisch dosiert, können die jeweiligen Alkylenoxide dem Reaktor separat oder als Mischung zugeführt werden. Eine Vorvermischung der Alkylenoxide untereinander kann beispielsweise durch ein in der gemeinsamen Dosierstrecke befindliches Mischaggregat erreicht werden ("inline-blending"). Es hat sich auch bewährt, die Alkylenoxide pumpendruckseitig in einen beispielsweise über einen oder mehrere Wärmetauscher geführten Umpumpkreislauf einzeln oder vorgemischt zu dosieren. Für die gute Durchmischung mit dem Reaktionsmedium ist es dann von Vorteil ein hochscherendes Mischaggregat in den Alkylenoxid- / Reaktionsmediumstrom zu integrieren.

Generell sind die unterschiedlichsten Reaktortypen für die Durchführung des erfindungsgemäßen Verfahrens geeignet. Im Allgemeinen werden zylinderförmige Behälter eingesetzt, welche ein Höhen- zu Durchmesserverhältnis von 1:1 bis 10:1 besitzen. Als Reaktorböden kommen beispielsweise Kugel-, Klöpper-, Flach- oder Konusböden in Frage.

Nach Ende der Epoxiddosierung oder bei einem Wechsel der Zusammensetzung des dosierten Alkylenoxidgemisches können sich Nachreaktionsphasen anschließen, in denen restliches Alkylenoxid abreagiert. Das Ende einer solchen Nachreaktionsphase ist erreicht, wenn kein weiterer Druckabfall im Reaktionskessel mehr feststellbar ist. Spuren unreagierter Alkylenoxide können nach Ende der (Nach-)Reaktionsphase gegebenenfalls im Vakuum bei einem absoluten Druck von 1 mbar bis 500 mbar oder durch Strippen quantitativ entfernt werden. Durch Strippen werden flüchtige Bestandteile, wie beispielsweise (Rest-)Alkylenoxide, unter Einleiten von Inertgasen oder Wasserdampf in die Flüssigphase bei gleichzeitig angelegtem Vakuum, beispielsweise durch Durchleiten von Inertgas bei einem Absolutdruck von 5 mbar bis 500 mbar, entfernt. Das Entfernen flüchtiger Bestandteile, wie beispielsweise nicht umgesetzter Alkylenoxide, entweder im Vakuum oder durch Strippen, erfolgt bei Temperaturen von 20 °C bis 200 °C, bevorzugt bei 50 °C bis 160 °C und vorzugsweise unter Rühren. Die Strippvorgänge können auch in sog. Strippkolonnen durchgeführt werden, in denen dem Produktstrom ein Inertgas- oder Wasserdampfstrom entgegengeleitet wird. Bevorzugt wird das Strippen mit Inertgasen in Abwesenheit von Wasserdampf durchgeführt.

Nach Erreichen von Druckkonstanz bzw. nach Entfernen flüchtiger Bestandteile im Vakuum und/oder Strippen kann das Produkt optional Aufarbeitungsschritten unterzogen werden, um etwaige Katalysatorspuren zu entfernen. Im Falle von mit Aminen katalysierten Alkylenoxidadditionsreaktionen sind solche Nachbehandlungsschritte im Allgemeinen nicht erforderlich. Die optionale Entfernung des Katalysators aus dem Rohprodukt kann auf verschiedene Weise erfolgen: Beispielsweise kann der basische Katalysator mit verdünnten Mineralsäuren wie Schwefelsäure oder Phosphorsäure neutralisiert werden. Die bei der Neutralisation entstehenden Salze werden abgetrennt, beispielsweise durch Filtration. Ausnahmen bilden die in EP-A 2028211, WO-A 2009/152954, WO-A 2011/039145 und WO-A 2009/106244 beschriebenen Polyetherpolyolherstellungsverfahren, die Aufarbeitungsverfahren ohne Salzabtrennungsschritte zum Inhalt haben. Alternativ kann die Neutralisation mit Hydroxycarbonsäuren (wie beispielsweise Milchsäure, wie in WO-A 98/20061 und US-A 2004/167316 beschrieben) erfolgen. Ebenso geeignet zur Neutralisation sind Carbonsäuren wie beispielsweise Ameisensäure, wie in US 4,521,548 beschrieben. Die durch die Neutralisation mit Carbonsäuren (wie beispielsweise Hydroxycarbonsäuren oder Ameisensäure) entstehenden Metallcarboxylate sind in dem Polyetherpolyol klar löslich, so dass die Abtrennung der Salze hier ebenfalls entfallen kann. Ebenfalls möglich zur Entfernung des Katalysators ist der Einsatz von sauren Kationenaustauschern, wie beispielsweise in DE-A 10024313 beschrieben. Des Weiteren können die Katalysatoren mittels Adsorbentien, wie beispielsweise Schichtsilikaten (Bentonit, Attapulgit), Diatomeenerde oder auch mit Hilfe synthetischer Magnesiumsilikate (wie AMBOSOL® oder BriteSorb®) abgetrennt werden. Solche Aufreinigungsverfahren sind beschrieben in RO 118433, US 4,507,475, EP-A 0693513 und EP-A 1751213. Phasentrennverfahren, die gegebenenfalls durch hydrophobe Lösungsmittel unterstützt werden, sind prinzipiell ebenfalls möglich, jedoch kann die Wasserlöslichkeit des auf Basis der bei Raumtemperatur festen Starterverbindungen hergestellten Oxyethyleneinheiten enthaltenden Polyetherpolyols für die effektive Durchführung von Phasentrennverfahren zu hoch sein. Phasentrennverfahren sind beispielsweise beschrieben in WO-A 01/14456, JP-A 6-157743, WO-A 96/20972 und US-A 3,823,145.

Es hat sich als vorteilhaft erwiesen Polyole ganz generell stets unter Inertgasatmosphäre zu handhaben. Dies gilt insbesondere für alkalische Polyetherpolyole, wie sie beispielsweise unter Alkalimetallhydroxidkatalyse vor Abtrennung des Katalysators anfallen oder für unter Aminkatalyse erhaltene Produkte. Auch für salzfreie, aufgearbeitete und stabilisierte Fertigprodukte oder über Doppelmetallcyanidkatalyse (DMC-Katalyse) hergestellte Polyetherpolyole werden Handhabung und Lagerung unter Sauerstoffausschluss empfohlen. Hierfür geeignete Inertgase sind beispielsweise Edelgase, Stickstoff oder Kohlendioxid, besonders geeignet sind Edelgase oder Stickstoff. Durch die Unterbindung von Sauerstoffzutritt lassen sich Produktverfärbungen weitestgehend vermeiden, dies gilt insbesondere bei erhöhten Temperaturen, die im Allgemeinen genutzt werden um durch Senkung der Produktviskosität die Handhabung der Polyetherpolyole zu erleichtern. Darüber hinaus entstehen unter Intergasatmosphäre auch deutlich weniger Peroxidgruppen, die unter Spaltung der Polyetherketten zur Bildung weiterer niedermolekularer oxidativer Abbauprodukte wie beispielsweise Acetaldehyd, Methanol, Ameisensäure, Ameisensäureester, Aceton und Formaldehyd beitragen. Somit können der Gehalt an leichtflüchtigen organischen Verbindungen im Polyetherpolyol gesenkt und Geruchsbelästigungen, gesundheitliche Beeinträchtigungen sowie Qualitätsminderungen vermieden werden. Dem nach dem erfindungsgemäßen Verfahren hergestellten Polyetherpolyol können gegebenenfalls Alterungsschutzmittel wie z. B. Antioxidantien zugesetzt werden. Nach dem erfindungsgemäßen Verfahren lassen sich Polyetherpolyole herstellen, welche bei 20 °C insbesondere optisch klar und / oder homogen sind.

Die nach dem erfindungsgemäßen Verfahren hergestellten Polyetherpolyole können als Ausgangskomponenten für die Herstellung von massiven oder geschäumten Polyurethanwerkstoffen sowie von Polyurethanelastomeren eingesetzt werden. Die Polyurethanwerkstoffe und -elastomere können auch Isocyanurat-, Allophanat- und Biuretstruktureinheiten enthalten. Ebenfalls möglich ist die Herstellung sogenannter Isocyanat-Präpolymere, bei deren Herstellung mindestens ein (Poly-)Isocyanat und mindestens ein nach dem erfindungsgemäßen Verfahren erhältliches Polyetherpolyol eingesetzt werden, wobei das molare Verhältnis von Isocyanatgruppen zu Hydroxygruppen größer als 1 ist, so dass die resultierenden Präpolymere Isocyanatgruppen enthalten. Die Isocyanatgruppen der Präpolymere können in einem oder mehreren Schritten mit Zerewitinoff-aktive Wasserstoffatome enthaltenden Verbindungen umgesetzt werden zur Herstellung der eigentlichen Endprodukte, wie beispielsweise massiven oder geschäumten Polyurethanwerkstoffen oder Polyurethanelastomeren. In umgekehrter Weise ist es auch möglich (Poly-)Isocyanate und mindestens ein nach dem erfindungsgemäßen Verfahren erhältliches Polyetherpolyol so umzusetzen, dass das molare Verhältnis von Isocyanatgruppen zu Hydroxygruppen kleiner als 1 ist und somit die resultierenden Vorpolymerisate Hydroxygruppen enthalten. Die Hydroxygruppen der Vorpolymerisate können in einem oder mehreren Schritten mit Isocyanatgruppen-haltigen Verbindungen umgesetzt werden zur Herstellung der eigentlichen Endprodukte wie massiven oder geschäumten Polyurethanwerkstoffen oder Polyurethanelastomeren.

Zur Herstellung von massiven oder geschäumten Polyurethanwerkstoffen sowie von Polyurethanelastomeren werden die nach dem erfindungsgemäßen Verfahren erhältlichen Polyetherpolyole gegebenenfalls mit weiteren isocyanatreaktiven Komponenten gemischt und mit organischen Polyisocyanaten, gegebenenfalls in Gegenwart von Treibmitteln, Katalysatoren und / oder anderer Zusatzstoffe wie z. B. Zellstabilisatoren, zur Reaktion gebracht.

**Beipiele**

**Eingesetzte Rohstoffe:**

**IRGANOX® 1076:**

Octadecyl-3-(3,5-di-*tert*-butyl-4-hydroxyphenyl)propionat (Ciba Specialty Chemicals (jetzt BASF))

**Mess- und Bestimmungsmethoden:**

**OH-Zahl und Viskosität**

Die Bestimmung der OH-Zahlen erfolgte gemäß der Vorschrift der DIN 53240. Die Viskositäten wurden mittels Rotationsviskosimeter (Physica MCR 51, Hersteller: Anton Paar) nach der Vorschrift der DIN 53019 ermittelt (Spindeltyp CC27, Scherratenbereich 16 - 128 $s^{-1}$).

**Beispiel 1**

In einen 2 L Laborautoklaven wurden unter Stickstoffatmosphäre 93,3 g einer wässrigen Sorbitlösung, enthaltend 70 Gew.-% Sorbit, und 5,391 g wässrige KOH-Lösung, enthaltend 44,87 Gew.-% KOH, gegeben. Der Inhalt des Autoklaven wurde sodann bei 115 °C unter Rühren (Kreuzbalkenrührer, 200 U/min.) und angelegtem Vakuum bei gleichzeitiger Einleitung von 50 mL Stickstoff pro Minute über einen Zeitraum von 3 h entwässert. Hierbei stellte sich gegen Ende der Entwässerungszeit ein Druck von 100 - 120 mbar ein. Man erwärmte auf 120 °C und dosierte 208,0 g Propylenoxid (3,581 mol) bei einer Rührerdrehzahl von 800 U/min. über einen Zeitraum von 5,88 h in den Kopfraum des Autoklaven, man begann die Dosierung bei einem absoluten Druck von 0,05 bar. Nach Ende der Propylenoxiddosierung schloss sich eine Nachreaktionszeit von 1,0 h Dauer an. Der Reaktordruck wurde sodann mittels Stickstoff auf 2,55 bar eingestellt und es wurden insgesamt 933,4 g Ethylenoxid über einen Zeitraum von insgesamt 9,95 h beginnend bei 120 °C in den Kopfraum des Autoklaven dosiert. Nachdem 360 g Ethylenoxid eindosiert worden waren, wurde die Reaktionstemperatur bei weiterlaufender Ethylenoxiddosierung auf 150 °C angehoben, die nach 370 g dosierter Ethylenoxidmenge erreicht waren. Das verbleibende Ethylenoxid wurde bei 150 °C eindosiert. Nach einer Nachreaktionszeit von 0,87 h Dauer wurde das Produkt im Vakuum (10 mbar) über einen Zeitraum von 30 min. bei 150 °C ausgeheizt. Nach Abkühlen auf 80 °C wurden 120 mL destilliertes Wasser und 17,395 g einer 12,15 gew.-%igen wässrigen Schwefelsäurelösung zugegeben und bei 80 °C über einen Zeitraum von 30 min. verrührt. Das entstandene Gemisch wurde in einen Glaskolben abgelassen und es wurden 0,5431 g IRGANOX® 1076 zugegeben. Danach wurde das Produkt 1 h bei 18 mbar (Wasserstrahlvakuum) und anschließend bei 110 °C über einen Zeitraum von 3 h bei 1 mbar entwässert. Nach Filtration über ein Tiefenfilter (T 750, Fa. Seitz) wurde ein klares Produkt mit einer OH-Zahl von 102 mg KOH / g und einer Viskosität von 711 mPas (bei 25 °C) erhalten.

**Beispiel 2**

In einen 2 L Laborautoklaven wurden unter Stickstoffatmosphäre 93,6 g einer wässrigen Sorbitlösung, enthaltend 70 Gew.-% Sorbit, und 5,303 g wässrige KOH-Lösung, enthaltend 44,87 Gew.-% KOH, gegeben. Der Inhalt des Autoklaven wurde sodann bei 115 °C unter Rühren (Kreuzbalkenrührer, 200 U/min.) und angelegtem Vakuum bei gleichzeitiger Einleitung von 50 mL Stickstoff pro Minute über einen Zeitraum von 3 h entwässert. Hierbei stellte sich gegen Ende der Entwässerungszeit ein Druck von 100 - 120 mbar ein. Man erwärmte auf 150 °C und dosierte 208,5 g Propylenoxid (3,590 mol) bei einer Rührerdrehzahl von 800 U/min. über einen Zeitraum von 4,05 h in den Kopfraum des Autoklaven, man begann die Dosierung bei einem absoluten Druck von 0,05 bar. Nach Ende der Propylenoxiddosierung schloss sich eine Nachreaktionszeit von 0,32 h Dauer an. Der Reaktordruck wurde sodann mittels Stickstoff auf 2,55 bar eingestellt und es wurden insgesamt 936,3 g Ethylenoxid über einen Zeitraum von insgesamt 8,58 h bei 150 °C eindosiert. Nach einer Nachreaktionszeit von 0,80 h Dauer wurde das Produkt im Vakuum (10 mbar) über einen Zeitraum von 30 min. bei 150 °C ausgeheizt. Nach Abkühlen auf 80 °C wurden 120 mL destilliertes Wasser und 17,129 g einer 12,15 gew.-%igen wässrigen Schwefelsäurelösung zugegeben und bei 80 °C über einen Zeitraum von 30 min. verrührt. Das entstandene Gemisch wurde in einen Glaskolben abgelassen und es wurden 0,5427 g IRGANOX® 1076 zugegeben. Danach wurde das Produkt 1 h bei 18 mbar (Wasserstrahlvakuum) und anschließend bei 110 °C über einen Zeitraum von 3 h bei 1 mbar entwässert. Nach Filtration über ein Tiefenfilter (T 750, Fa. Seitz) wurde ein klares Produkt mit einer OH-Zahl von 100 mg KOH / g und einer Viskosität von 707 mPas (bei 25 °C) erhalten.

**Beispiel 3**

In einen 2 L Laborautoklaven wurden unter Stickstoffatmosphäre 151,5 g einer wässrigen Sorbitlösung, enthaltend 70 Gew.-% Sorbit, und 5,297 g wässrige KOH-Lösung, enthaltend 46,59 Gew.-% KOH, gegeben. Der Inhalt des Autoklaven wurde sodann bei 115 °C unter Rühren (Kreuzbalkenrührer, 200 U/min.) und angelegtem Vakuum bei gleichzeitiger Einleitung von 50 mL Stickstoff pro Minute über einen Zeitraum von 3,2 h entwässert. Hierbei stellte sich gegen Ende der Entwässerungszeit ein Druck von 100 - 120 mbar ein. Man erwärmte auf 150 °C und dosierte 337,4 g Propylenoxid (5,809 mol) bei einer Rührerdrehzahl von 800 U/min. über einen Zeitraum von 1,75 h in den Kopfraum des Autoklaven, man begann die Dosierung bei einem absoluten Druck von 0,05 bar. Nach Ende der Propylenoxiddosierung schloss sich eine Nachreaktionszeit von 0,88 h Dauer an. Der Reaktordruck wurde sodann mittels Stickstoff auf 2,55 bar eingestellt und es wurden insgesamt 757,1 g Ethylenoxid über einen Zeitraum von insgesamt 3,32 h bei 150 °C eindosiert. Nach einer Nachreaktionszeit von 0,87 h Dauer wurde das Produkt im Vakuum (10 mbar) über einen Zeitraum von 30 min. bei 150 °C ausgeheizt. Nach Abkühlen auf 80 °C wurden 120 mL destilliertes Wasser und 18,381 g einer 11,74 gew.-%igen wässrigen Schwefelsäurelösung zugegeben und bei 80 °C über einen Zeitraum von 30 min. verrührt. Das entstandene Gemisch wurde in einen Glaskolben abgelassen und es wurden 0,5446 g IRGANOX® 1076 zugegeben. Danach wurde das Produkt 1 h bei 18 mbar (Wasserstrahlvakuum) und anschließend bei 110 °C über einen Zeitraum von 3 h bei 1 mbar entwässert. Nach Filtration über ein Tiefenfilter (T 750, Fa. Seitz) wurde ein klares Produkt mit einer OH-Zahl von 160 mg KOH / g und einer Viskosität von 694 mPas (bei 25 °C) erhalten.

**Beispiel 4**

In einen 2 L Laborautoklaven wurden unter Stickstoffatmosphäre 176,5 g einer wässrigen Sorbitlösung, enthaltend 70 Gew.-% Sorbit, und 5,179 g wässrige KOH-Lösung, enthaltend 46,59 Gew.-% KOH, gegeben. Der Inhalt des Autoklaven wurde sodann bei 115 °C unter Rühren (Kreuzbalkenrührer, 200 U/min.) und angelegtem Vakuum bei gleichzeitiger Einleitung von 50 mL Stickstoff pro Minute über einen Zeitraum von 2,87 h entwässert. Hierbei stellte sich gegen Ende der Entwässerungszeit ein Druck von 100 - 120 mbar ein. Man erwärmte auf 150 °C und dosierte 196,2 g Propylenoxid (3,378 mol) bei einer Rührerdrehzahl von 800 U/min. über einen Zeitraum von 1,1 h in den Kopfraum des Autoklaven, man begann die Dosierung bei einem absoluten Druck von 0,05 bar. Nach Ende der Propylenoxiddosierung schloss sich eine Nachreaktionszeit von 0,82 h Dauer an. Der Reaktordruck wurde sodann mittels Stickstoff auf 2,55 bar eingestellt und es wurden insgesamt 880,7 g Ethylenoxid über einen Zeitraum von insgesamt 4,35 h bei 150 °C eindosiert. Nach einer Nachreaktionszeit von 0,35 h Dauer wurde das Produkt im Vakuum (10 mbar) über einen Zeitraum von 30 min. bei 150 °C ausgeheizt. Nach Abkühlen auf 80 °C wurden 120 mL destilliertes Wasser und 17,971 g einer 11,74 gew.-%igen wässrigen Schwefelsäurelösung zugegeben und bei 80 °C über einen Zeitraum von 30 min. verrührt. Das entstandene Gemisch wurde in einen Glaskolben abgelassen und es wurden 0,5537 g IRGANOX® 1076 zugegeben. Danach wurde das Produkt 1 h bei 18 mbar (Wasserstrahlvakuum) und anschließend bei 110 °C über einen Zeitraum von 3 h bei 1 mbar entwässert. Nach Filtration über ein Tiefenfilter (T 750, Fa. Seitz) wurde ein klares Produkt mit einer OH-Zahl von 191 mg KOH / g und einer Viskosität von 744 mPas (bei 25 °C) erhalten.

**Beispiel 5**

In einen 2 L Laborautoklaven wurden unter Stickstoffatmosphäre 133,5 g einer wässrigen Sorbitlösung, enthaltend 70 Gew.-% Sorbit, und 5,060 g wässrige KOH-Lösung, enthaltend 46,59 Gew.-% KOH, gegeben. Der Inhalt des Autoklaven wurde sodann bei 115 °C unter Rühren (Kreuzbalkenrührer, 200 U/min.) und angelegtem Vakuum bei gleichzeitiger Einleitung von 50 mL Stickstoff pro Minute über einen Zeitraum von 3,0 h entwässert. Hierbei stellte sich gegen Ende der Entwässerungszeit ein Druck von 100 - 120 mbar ein. Man erwärmte auf 150 °C und dosierte 201,7 g Propylenoxid (3,473 mol) bei einer Rührerdrehzahl von 800 U/min. über einen Zeitraum von 1,47 h in den Kopfraum des Autoklaven, man begann die Dosierung bei einem absoluten Druck von 0,05 bar. Nach Ende der Propylenoxiddosierung schloss sich eine Nachreaktionszeit von 1,1 h Dauer an. Der Reaktordruck wurde sodann mittels Stickstoff auf 2,55 bar eingestellt und es wurden insgesamt 905,2 g Ethylenoxid über einen Zeitraum von insgesamt 4,53 h bei 150 °C eindosiert. Nach einer Nachreaktionszeit von 0,92 h Dauer wurde das Produkt im Vakuum (10 mbar) über einen Zeitraum von 1,45 h bei 150 °C ausgeheizt. Nach Abkühlen auf 80 °C wurden 120 mL destilliertes Wasser und 19,8417 g einer 11,74 gew.-%igen wässrigen Schwefelsäurelösung zugegeben und bei 80 °C über einen Zeitraum von 30 min.

verrührt. Das entstandene Gemisch wurde in einen Glaskolben abgelassen und es wurden 0,5410 g IRGANOX® 1076 zugegeben. Danach wurde das Produkt 1 h bei 18 mbar (Wasserstrahlvakuum) und anschließend bei 110 °C über einen Zeitraum von 3 h bei 1 mbar entwässert. Nach Filtration über ein Tiefenfilter (T 750, Fa. Seitz) wurde ein klares Produkt mit einer OH-Zahl von 143 mg KOH / g und einer Viskosität von 692 mPas (bei 25 °C) erhalten.

**Beispiel 6, Vergleich**

In einen 2 L Laborautoklaven wurden unter Stickstoffatmosphäre 93,27 g einer wässrigen Sorbitlösung, enthaltend 70 Gew.-% Sorbit, und 5,667 g wässrige KOH-Lösung, enthaltend 44,87 Gew.-% KOH, gegeben. Der Inhalt des Autoklaven wurde sodann bei 115 °C unter Rühren (Kreuzbalkenrührer, 200 U/min.) und angelegtem Vakuum bei gleichzeitiger Einleitung von 50 mL Stickstoff pro Minute über einen Zeitraum von 3,0 h entwässert. Hierbei stellte sich gegen Ende der Entwässerungszeit ein Druck von 100 - 120 mbar ein. Man erwärmte auf 150 °C und dosierte 207,3 g Propylenoxid (3,569 mol) bei einer Rührerdrehzahl von 800 U/min. über einen Zeitraum von 1,62 h in den Kopfraum des Autoklaven, man begann die Dosierung bei einem absoluten Druck von 0,05 bar. Nach Ende der Propylenoxiddosierung schloss sich eine Nachreaktionszeit von 0,38 h Dauer an. Der Reaktordruck wurde sodann mittels Stickstoff auf 2,55 bar eingestellt und es wurden insgesamt 928,3 g Ethylenoxid über einen Zeitraum von insgesamt 8,58 h bei 150 °C eindosiert. Nach einer Nachreaktionszeit von 0,28 h Dauer wurde das Produkt im Vakuum (10 mbar) über einen Zeitraum von 30 min. bei 150 °C ausgeheizt. Nach Abkühlen auf 80 °C wurden 120 mL destilliertes Wasser und 18,280 g einer 12,15 gew.-%igen wässrigen Schwefelsäurelösung zugegeben und bei 80 °C über einen Zeitraum von 30 min. verrührt. Das entstandene Gemisch wurde in einen Glaskolben abgelassen und es wurden 0,5388 g IRGANOX® 1076 zugegeben. Danach wurde das Produkt 1 h bei 18 mbar (Wasserstrahlvakuum) und anschließend bei 110 °C über einen Zeitraum von 3 h bei 1 mbar entwässert. Nach Filtration über ein Tiefenfilter (T 750, Fa. Seitz) wurde ein zunächst klares Produkt mit einer OH-Zahl von 102 mg KOH / g erhalten. Das Material erstarrte beim Abkühlen auf Raumtemperatur. Bei 40 °C wurde eine Viskosität von 316 mPas ermittelt.

**Beispiel 7, Vergleich**

In einen 2 L Laborautoklaven wurden unter Stickstoffatmosphäre 93,4 g einer wässrigen Sorbitlösung, enthaltend 70 Gew.-% Sorbit, und 2,793 g wässrige KOH-Lösung, enthaltend 44,87 Gew.-% KOH, gegeben. Der Inhalt des Autoklaven wurde sodann bei 115 °C unter Rühren (Kreuzbalkenrührer, 200 U/min.) und angelegtem Vakuum bei gleichzeitiger Einleitung von 50 mL Stickstoff pro Minute über einen Zeitraum von 3,0 h entwässert. Hierbei stellte sich gegen Ende der Entwässerungszeit ein Druck von 100 - 120 mbar ein. Man erwärmte auf 150 °C und dosierte 208,1 g Propylenoxid (3,583 mol) bei einer Rührerdrehzahl von 800 U/min. über einen Zeitraum von 1,75 h in den Kopfraum des Autoklaven, man begann die Dosierung bei einem absoluten Druck von 0,05 bar. Nach Ende der Propylenoxiddosierung schloss sich eine Nachreaktionszeit von 1,05 h Dauer an. Der Reaktordruck wurde sodann mittels Stickstoff auf 2,55 bar eingestellt und es wurden insgesamt 934,4 g Ethylenoxid über einen Zeitraum von insgesamt 8,55 h bei 150 °C eindosiert. Nach einer Nachreaktionszeit von 0,50 h Dauer wurde das Produkt im Vakuum (10 mbar) über einen Zeitraum von 30 min. bei 150 °C ausgeheizt. Nach Abkühlen auf 80 °C wurden 120 mL destilliertes Wasser und 9,8637 g einer 12,15 gew.-%igen wässrigen Schwefelsäurelösung zugegeben und bei 80 °C über einen Zeitraum von 30 min. verrührt. Das entstandene Gemisch wurde in einen Glaskolben abgelassen und es wurden 0,5331 g IRGANOX® 1076 zugegeben. Danach wurde das Produkt 1 h bei 18 mbar (Wasserstrahlvakuum) und anschließend bei 110 °C über einen Zeitraum von 3 h bei 1 mbar entwässert. Nach Filtration über ein Tiefenfilter (T 750, Fa. Seitz) wurde ein zunächst klares Produkt mit einer OH-Zahl von 102 mg KOH / g erhalten. Das Material trübte nach einigen Tagen Lagerung bei Raumtemperatur ein. Bei 25 °C wurde eine Viskosität von 723 mPas ermittelt.

**Beispiel 8, Vergleich**

In einen 2 L Laborautoklaven wurden unter Stickstoffatmosphäre 162,4 g einer wässrigen Sorbitlösung, enthaltend 70 Gew.-% Sorbit, und 10,798 g wässrige KOH-Lösung, enthaltend 44,87 Gew.-% KOH, gegeben. Der Inhalt des Autoklaven wurde sodann bei 115 °C unter Rühren (Kreuzbalkenrührer, 200 U/min.) und angelegtem Vakuum bei gleichzeitiger Einleitung von 50 mL Stickstoff pro Minute über einen Zeitraum von 3,0 h entwässert. Hierbei stellte sich gegen Ende der Entwässerungszeit ein Druck von 100 - 120 mbar ein. Man erwärmte auf 150 °C und dosierte 869,1 g Propylenoxid (14,964 mol) bei einer Rührerdrehzahl von 800 U/min. über einen Zeitraum von 3,32 h in den Kopfraum des Autoklaven, man begann die Dosierung bei einem absoluten Druck von 0,05 bar. Nach einer Nachreaktionszeit von 2,63 h Dauer wurde das Produkt im Vakuum (10 mbar) über einen Zeitraum von 30 min. bei 150 °C ausgeheizt. Nach Abkühlen auf 80 °C wurden 100 mL destilliertes Wasser und 33,209 g einer 12,22 gew.-%igen wässrigen Schwefelsäurelösung zugegeben und bei 80 °C über einen Zeitraum von 30 min. verrührt. Das entstandene Gemisch wurde in einen Glaskolben abgelassen und es wurden 1,7081 g IRGANOX® 1076 zugegeben. Danach wurde das Produkt 1 h bei 18 mbar (Wasserstrahlvakuum) und anschließend bei 110 °C über einen Zeitraum von 3 h bei 1 mbar entwässert. Nach Filtration über ein Tiefenfilter (T 750, Fa. Seitz) wurde ein klares Produkt mit einer OH-Zahl von 208 mg KOH / g und einer Viskosität von 1225 mPas (bei 25 °C) erhalten.

**Beispiel 9, Vergleich**

In einen 2 L Laborautoklaven wurden unter Stickstoffatmosphäre 93,6 g einer wässrigen Sorbitlösung, enthaltend 70 Gew.-% Sorbit, und 5,320 g wässrige KOH-Lösung, enthaltend 44,87 Gew.-% KOH, gegeben. Der Inhalt des Autoklaven wurde sodann bei 115 °C unter Rühren (Kreuzbalkenrührer, 200 U/min.) und angelegtem Vakuum bei gleichzeitiger Einleitung von 50 mL Stickstoff pro Minute über einen Zeitraum von 3 h entwässert. Hierbei stellte sich gegen Ende der Entwässerungszeit ein Druck von 100 - 120 mbar ein. Man erwärmte auf 150 °C und dosierte 207,2 g Propylenoxid (3,567 mol) bei einer Rührerdrehzahl von 800 U/min. über einen Zeitraum von 1,8 h in den Kopfraum des Autoklaven, man begann die Dosierung bei einem absoluten Druck von 0,05 bar. Nach Ende der Propylenoxiddosierung schloss sich eine Nachreaktionszeit von 0,47 h Dauer an. Der Reaktordruck wurde sodann mittels Stickstoff auf 2,55 bar eingestellt und es wurden insgesamt 936,3 g Ethylenoxid über einen Zeitraum von insgesamt 10,2 h beginnend bei 150 °C in den Kopfraum des Autoklaven dosiert. Nachdem 360 g Ethylenoxid eindosiert worden waren, wurde die Reaktionstemperatur bei weiterlaufender Ethylenoxiddosierung auf 120 °C gesenkt, die nach 370 g dosierter Ethylenoxidmenge erreicht waren. Das verbleibende Ethylenoxid wurde bei 120 °C eindosiert. Nach einer Nachreaktionszeit von 0,85 h Dauer wurde das Produkt im Vakuum (10 mbar) über einen Zeitraum von 30 min. bei 120 °C ausgeheizt. Nach Abkühlen auf 80 °C wurden 120 mL destilliertes Wasser und 17,172 g einer 12,15 gew.-%igen wässrigen Schwefelsäurelösung zugegeben und bei 80 °C über einen Zeitraum von 30 min. verrührt. Das entstandene Gemisch wurde in einen Glaskolben abgelassen und es wurden 0,5436 g IRGANOX® 1076 zugegeben. Danach wurde das Produkt 1 h bei 18 mbar (Wasserstrahlvakuum) und anschließend bei 110 °C über einen Zeitraum von 3 h bei 1 mbar entwässert. Nach Filtration über ein Tiefenfilter (T 750, Fa. Seitz) wurde ein zunächst klares Produkt mit einer OH-Zahl von 98,1 mg KOH / g erhalten. Das Material trübte nach einigen Tagen Lagerung bei Raumtemperatur ein. Bei 40 °C wurde eine Viskosität von 347 mPas ermittelt.

**Beispiel 10, Vergleich**

In einen 2 L Laborautoklaven wurden unter Stickstoffatmosphäre 93,5 g einer wässrigen Sorbitlösung, enthaltend 70 Gew.-% Sorbit, und 5,324 g wässrige KOH-Lösung, enthaltend 44,87 Gew.-% KOH, gegeben. Der Inhalt des Autoklaven wurde sodann bei 115 °C unter Rühren (Kreuzbalkenrührer, 200 U/min.) und angelegtem Vakuum bei gleichzeitiger Einleitung von 50 mL Stickstoff pro Minute über einen Zeitraum von 3,0 h entwässert. Hierbei stellte sich gegen Ende der Entwässerungszeit ein Druck von 100 - 120 mbar ein. Man erwärmte auf 150 °C und dosierte 208,9 g Propylenoxid (3,597 mol) bei einer Rührerdrehzahl von 800 U/min. über einen Zeitraum von 1,52 h in den Kopfraum des Autoklaven, man begann die Dosierung bei einem absoluten Druck von 0,05 bar. Nach Ende der Propylenoxiddosierung schloss sich eine Nachreaktionszeit von 0,81 h Dauer an. Der Reaktordruck wurde sodann mittels Stickstoff auf 2,55 bar eingestellt und es wurden insgesamt 935,9 g Ethylenoxid über einen Zeitraum von insgesamt 11,7 h bei 150 °C eindosiert. Nach einer Nachreaktionszeit von 0,30 h Dauer wurde das Produkt im Vakuum (10 mbar) über einen Zeitraum von 30 min. bei 150 °C ausgeheizt. Nach Abkühlen auf 80 °C wurden 120 mL destilliertes Wasser und 17,184 g einer 12,15 gew.-%igen wässrigen Schwefelsäurelösung zugegeben und bei 80 °C über einen Zeitraum von 30 min. verrührt. Das entstandene Gemisch wurde in einen Glaskolben abgelassen und es wurden 0,548 g IRGANOX® 1076 zugegeben. Danach wurde das Produkt 1 h bei 18 mbar (Wasserstrahlvakuum) und anschließend bei 110 °C über einen Zeitraum von 3 h bei 1 mbar entwässert. Nach Filtration über ein Tiefenfilter (T 750, Fa. Seitz) wurde ein zunächst klares Produkt mit einer OH-Zahl von 99,6 mg KOH / g erhalten. Das Material erstarrte beim Abkühlen auf Raumtemperatur. Bei 40 °C wurde eine Viskosität von 335 mPas ermittelt.

**Beispiel 11, Vergleich**

In einen 2 L Laborautoklaven wurden unter Stickstoffatmosphäre 93,1 g einer wässrigen Sorbitlösung, enthaltend 70 Gew.-% Sorbit, und 5,195 g wässrige KOH-Lösung, enthaltend 46,59 Gew.-% KOH, gegeben. Der Inhalt des Autoklaven wurde sodann bei 115 °C unter Rühren (Kreuzbalkenrührer, 200 U/min.) und angelegtem Vakuum bei gleichzeitiger Einleitung von 50 mL Stickstoff pro Minute über einen Zeitraum von 3,0 h entwässert. Hierbei stellte sich gegen Ende der Entwässerungszeit ein Druck von 100 - 120 mbar ein. Man erwärmte auf 150 °C und dosierte 1135,1 g Propylenoxid (19,544 mol) bei einer Rührerdrehzahl von 800 U/min. über einen Zeitraum von 5,0 h in den Kopfraum des Autoklaven, man begann die Dosierung bei einem absoluten Druck von 0,05 bar. Nach einer Nachreaktionszeit von 3,6 h Dauer wurde das Produkt im Vakuum (10 mbar) über einen Zeitraum von 30 min. bei 150 °C ausgeheizt. Nach Abkühlen auf 80 °C wurden 100 mL destilliertes Wasser und 17,50 g einer 12,15 gew.-%igen wässrigen Schwefelsäurelösung zugegeben und bei 80 °C über einen Zeitraum von 30 min. verrührt. Das entstandene Gemisch wurde in einen Glaskolben abgelassen und es wurden 0,5441 g IRGANOX® 1076 zugegeben. Danach wurde das Produkt 1 h bei 18 mbar (Wasserstrahlvakuum) und anschließend bei 110 °C über einen Zeitraum von 3 h bei 8 mbar entwässert. Nach Filtration über ein Tiefenfilter (T 750, Fa. Seitz) wurde ein klares Produkt mit einer OH-Zahl von 101 mg KOH / g und einer Viskosität von 652 mPas (bei 25 °C) erhalten.

**Beispiel 12, Vergleich**

In einen 2 L Laborautoklaven wurden unter Stickstoffatmosphäre 93,1 g einer wässrigen Sorbitlösung, enthaltend 70 Gew.-% Sorbit, und 5,085 g wässrige KOH-Lösung, enthaltend 46,59 Gew.-% KOH, gegeben. Der Inhalt des Autoklaven wurde sodann bei 115 °C unter Rühren (Kreuzbalkenrührer, 200 U/min.) und angelegtem Vakuum bei gleichzeitiger Einleitung von 50 mL Stickstoff pro Minute über einen Zeitraum von 3,0 h entwässert. Hierbei stellte sich gegen Ende der Entwässerungszeit ein Druck von 100 - 120 mbar ein. Man erwärmte auf 150 °C und dosierte 1135,1 g Propylenoxid (19,544 mol) bei einer Rührerdrehzahl von 800 U/min. über einen Zeitraum von 6,8 h in den Kopfraum des Autoklaven, man begann die Dosierung bei einem absoluten Druck von 0,05 bar. Nach einer Nachreaktionszeit von 2,0 h Dauer wurde das Produkt im Vakuum (10 mbar) über einen Zeitraum von 30 min. bei 150 °C ausgeheizt. Nach Abkühlen auf 80 °C wurden 100 mL destilliertes Wasser und 17,049 g einer 12,15 gew.-%igen wässrigen Schwefelsäurelösung zugegeben und bei 80 °C über einen Zeitraum von 30 min. verrührt. Das entstandene Gemisch wurde in einen Glaskolben abgelassen und es wurden 0,5381 g IRGANOX® 1076 zugegeben. Danach wurde das Produkt 1 h bei 18 mbar (Wasserstrahlvakuum) und anschließend bei 110 °C über einen Zeitraum von 3 h bei 8 mbar entwässert. Nach Filtration über ein Tiefenfilter (T 750, Fa. Seitz) wurde ein klares Produkt mit einer OH-Zahl von 101 mg KOH / g und einer Viskosität von 265 mPas (bei 40 °C) erhalten.

**Beispiel 13, Vergleich**

In einen 2 L Laborautoklaven wurden unter Stickstoffatmosphäre 65,7 g Glycerin und 5,134 g wässrige KOH-Lösung, enthaltend 46,59 Gew.-% KOH, gegeben. Der Inhalt des Autoklaven wurde sodann bei 115 °C unter Rühren (Kreuzbalkenrührer, 200 U/min.) und angelegtem Vakuum bei gleichzeitiger Einleitung von 50 mL Stickstoff pro Minute über einen Zeitraum von 3,0 h entwässert. Hierbei stellte sich gegen Ende der Entwässerungszeit ein Druck von 100 - 120 mbar ein. Man erwärmte auf 150 °C und dosierte 206,1 g Propylenoxid (3,549 mol) bei einer Rührerdrehzahl von 800 U/min. über einen Zeitraum von 2,08 h in den Kopfraum des Autoklaven, man begann die Dosierung bei einem absoluten Druck von 0,05 bar. Nach Ende der Propylenoxiddosierung schloss sich eine Nachreaktionszeit von 0,50 h Dauer an. Der Reaktordruck wurde sodann mittels Stickstoff auf 2,55 bar eingestellt und es wurden insgesamt 928,3 g Ethylenoxid über einen Zeitraum von insgesamt 9,6 h bei 150 °C eindosiert. Nach einer Nachreaktionszeit von 1,20 h Dauer wurde das Produkt im Vakuum (10 mbar) über einen Zeitraum von 30 min. bei 150 °C ausgeheizt. Nach Abkühlen auf 80 °C wurden 120 mL destilliertes Wasser und 18,148 g einer 12,15 gew.-%igen wässrigen Schwefelsäurelösung zugegeben und bei 80 °C über einen Zeitraum von 30 min. verrührt. Das entstandene Gemisch wurde in einen Glaskolben abgelassen und es wurden 0,5467 g IRGANOX® 1076 zugegeben. Danach wurde das Produkt 1 h bei 18 mbar (Wasserstrahlvakuum) und anschließend bei 110 °C über einen Zeitraum von 3 h bei 1 mbar entwässert. Nach Filtration über ein Tiefenfilter (T 750, Fa. Seitz) wurde ein klares Produkt mit einer OH-Zahl von 100,3 mg KOH / g und einer Viskosität von 383 mPas (bei 25 °C) erhalten.

**Beispiel 14, Vergleich**

In einen 2 L Laborautoklaven wurden unter Stickstoffatmosphäre 79,9 g einer wässrigen Sorbitlösung, enthaltend 70 Gew.-% Sorbit, und 5,174 g wässrige KOH-Lösung, enthaltend 46,59 Gew.-% KOH, gegeben. Der Inhalt des Autoklaven wurde sodann bei 115 °C unter Rühren (Kreuzbalkenrührer, 200 U/min.) und angelegtem Vakuum bei gleichzeitiger Einleitung von 50 mL Stickstoff pro Minute über einen Zeitraum von 2,67 h entwässert. Hierbei stellte sich gegen Ende der Entwässerungszeit ein Druck von 100 - 120 mbar ein. Man erwärmte auf 150 °C und dosierte 352,9 g Propylenoxid (6,076 mol) bei einer Rührerdrehzahl von 800 U/min. über einen Zeitraum von 5,68 h in den Kopfraum des Autoklaven, man begann die Dosierung bei einem absoluten Druck von 0,05 bar. Nach Ende der Propylenoxiddosierung schloss sich eine Nachreaktionszeit von 1,08 h Dauer an. Der Reaktordruck wurde sodann mittels Stickstoff auf 2,55 bar eingestellt und es wurden insgesamt 791,8 g Ethylenoxid über einen Zeitraum von insgesamt 8,70 h bei 150 °C eindosiert. Nach einer Nachreaktionszeit von 1,20 h Dauer wurde das Produkt im Vakuum (10 mbar) über einen Zeitraum von 30 min. bei 150 °C ausgeheizt. Nach Abkühlen auf 80 °C wurden 120 mL destilliertes Wasser und 17,971 g einer 11,74 gew.-%igen wässrigen Schwefelsäurelösung zugegeben und bei 80 °C über einen Zeitraum von 30 min. verrührt. Das entstandene Gemisch wurde in einen Glaskolben abgelassen und es wurden 0,5390 g IRGANOX® 1076 zugegeben. Danach wurde das Produkt 1 h bei 18 mbar (Wasserstrahlvakuum) und anschließend bei 110 °C über einen Zeitraum von 3 h bei 1 mbar entwässert. Nach Filtration über ein Tiefenfilter (T 750, Fa. Seitz) wurde ein zunächst klares Produkt mit einer OH-Zahl von 89,6 mg KOH / g und einer Viskosität von 699 mPas (bei 25 °C) erhalten. Das Material trübte beim Abkühlen auf Raumtemperatur rasch ein.

**Beispiel 15, Vergleich**

In einen 2 L Laborautoklaven wurden unter Stickstoffatmosphäre 69,2 g einer wässrigen Sorbitlösung, enthaltend 70 Gew.-% Sorbit, und 5,502 g wässrige KOH-Lösung, enthaltend 46,59 Gew.-% KOH, gegeben. Der Inhalt des Autoklaven wurde sodann bei 115 °C unter Rühren (Kreuzbalkenrührer, 200 U/min.) und angelegtem Vakuum bei gleichzeitiger Einleitung von 50 mL Stickstoff pro Minute über einen Zeitraum von 3,05 h entwässert. Hierbei stellte sich gegen Ende der Entwässerungszeit ein Druck von 100 - 120 mbar ein. Man erwärmte auf 150 °C und dosierte 461,5 g Propylenoxid (7,946 mol) bei einer Rührerdrehzahl von 800 U/min. über einen Zeitraum von 6,38 h in den Kopfraum des Autoklaven, man begann die Dosierung bei einem absoluten Druck von 0,05 bar. Nach Ende der Propylenoxiddosierung schloss sich eine Nachreaktionszeit von 1,65 h Dauer an. Der Reaktordruck wurde sodann mittels Stickstoff auf 2,55 bar eingestellt und es wurden insgesamt 690,4 g Ethylenoxid über einen Zeitraum von insgesamt 8,55 h bei 150 °C eindosiert. Nach einer Nachreaktionszeit von 2,88 h Dauer wurde das Produkt im Vakuum (10 mbar) über einen Zeitraum von 30 min. bei 150 °C ausgeheizt. Nach Abkühlen auf 80 °C wurden 120 mL destilliertes Wasser und 20,003 g einer 11,74 gew.-%igen wässrigen Schwefelsäurelösung zugegeben und bei 80 °C über einen Zeitraum von 30 min. verrührt. Das entstandene Gemisch wurde in einen Glaskolben abgelassen und es wurden 0,5580 g IRGANOX® 1076 zugegeben. Danach wurde das Produkt 1 h bei 18 mbar (Wasserstrahlvakuum) und anschließend bei 110 °C über einen Zeitraum von 3 h bei 1 mbar entwässert. Nach Filtration über ein Tiefenfilter (T 750, Fa. Seitz) wurde ein zunächst klares Produkt mit einer OH-Zahl von 74,4 mg KOH / g und einer Viskosität von 783 mPas (bei 25 °C) erhalten. Das Material trübte beim Abkühlen auf Raumtemperatur rasch ein.

**Beispiel 16, Vergleich**

In einen 2 L Laborautoklaven wurden unter Stickstoffatmosphäre 97,6 g einer wässrigen Sorbitlösung, enthaltend 70 Gew.-% Sorbit, und 5,082 g wässrige KOH-Lösung, enthaltend 46,59 Gew.-% KOH, gegeben. Der Inhalt des Autoklaven wurde sodann bei 115 °C unter Rühren (Kreuzbalkenrührer, 200 U/min.) und angelegtem Vakuum bei gleichzeitiger Einleitung von 50 mL Stickstoff pro Minute über einen Zeitraum von 3,0 h entwässert. Hierbei stellte sich gegen Ende der Entwässerungszeit ein Druck von 100 - 120 mbar ein. Man erwärmte auf 150 °C und dosierte 156,6 g Propylenoxid (2,696 mol) bei einer Rührerdrehzahl von 800 U/min. über einen Zeitraum von 1,20 h in den Kopfraum des Autoklaven, man begann die Dosierung bei einem absoluten Druck von 0,05 bar. Nach Ende der Propylenoxiddosierung schloss sich eine Nachreaktionszeit von 2,20 h Dauer an. Der Reaktordruck wurde sodann mittels Stickstoff auf 2,55 bar eingestellt und es wurden insgesamt 975,4 g Ethylenoxid über einen Zeitraum von insgesamt 8,57 h bei 150 °C eindosiert. Nach einer Nachreaktionszeit von 0,80 h Dauer wurde das Produkt im Vakuum (10 mbar) über einen Zeitraum von 30 min. bei 150 °C ausgeheizt. Nach Abkühlen auf 80 °C wurden 120 mL destilliertes Wasser und 19,8122 g einer 11,74 gew.-%igen wässrigen Schwefelsäurelösung zugegeben und bei 80 °C über einen Zeitraum von 30 min. verrührt. Das entstandene Gemisch wurde in einen Glaskolben abgelassen und es wurden 0,5439 g IRGANOX® 1076 zugegeben. Danach wurde das Produkt 1 h bei 18 mbar (Wasserstrahlvakuum) bei 80 °C bis 110 °C und anschließend bei 110 °C über einen Zeitraum von 3 h bei 1 mbar entwässert. Nach Filtration über ein Tiefenfilter (T 750, Fa. Seitz) wurde ein zunächst klares Produkt mit einer OH-Zahl von 104,3 mg KOH / g und einer Viskosität von 335 mPas (bei 40 °C) erhalten. Das Material erstarrte beim Abkühlen auf Raumtemperatur.

**Beispiel 17, Vergleich**

In einen 2 L Laborautoklaven wurden unter Stickstoffatmosphäre 93,4 g einer wässrigen Sorbitlösung, enthaltend 70 Gew.-% Sorbit, und 12,285 g wässrige KOH-Lösung, enthaltend 46,59 Gew.-% KOH, gegeben. Der Inhalt des Autoklaven wurde sodann bei 115 °C unter Rühren (Kreuzbalkenrührer, 200 U/min.) und angelegtem Vakuum bei gleichzeitiger Einleitung von 50 mL Stickstoff pro Minute über einen Zeitraum von 3,17 h entwässert. Hierbei stellte sich gegen Ende der Entwässerungszeit ein Druck von 100 - 120 mbar ein. Man erwärmte auf 150 °C und dosierte 908,2 g Propylenoxid (15,637 mol) bei einer Rührerdrehzahl von 800 U/min. über einen Zeitraum von 6,75 h in den Kopfraum des Autoklaven, man begann die Dosierung bei einem absoluten Druck von 0,05 bar. Nach Ende der Propylenoxiddosierung schloss sich eine Nachreaktionszeit von 0,92 h Dauer an. Der Reaktordruck wurde sodann mittels Stickstoff auf 2,55 bar eingestellt und es wurden insgesamt 227,0 g Ethylenoxid über einen Zeitraum von insgesamt 2,27 h bei 150 °C eindosiert. Nach einer Nachreaktionszeit von 2,73 h Dauer wurde das Produkt im Vakuum (10 mbar) über einen Zeitraum von 30 min. bei 150 °C ausgeheizt. Nach Abkühlen auf 80 °C wurden 120 mL destilliertes Wasser und 42,621 g einer 11,74 gew.-%igen wässrigen Schwefelsäurelösung zugegeben und bei 80 °C über einen Zeitraum von 30 min.

verrührt. Das entstandene Gemisch wurde in einen Glaskolben abgelassen und es wurden 0,6066 g IRGANOX® 1076 zugegeben. Danach wurde das Produkt 1 h bei 18 mbar (Wasserstrahlvakuum) bei 80 °C und anschließend bei 110 °C über einen Zeitraum von 3 h bei 8 mbar entwässert. Nach Filtration über ein Tiefenfilter (T 750, Fa. Seitz) wurde ein zunächst klares Produkt mit einer OH-Zahl von 101 mg KOH / g erhalten. Das Material trübte beim Abkühlen auf Raumtemperatur rasch ein.

Die Versuchsergebnisse sind in Tabelle 1 zusammengefasst.

**Tabelle 1:**

| Beispiel | $x_m(PO)$ [mol] | $x(OH)$ [mol] | $t_m(PO)$ [h] | ber. OHZ [mg KOH/g] | $\dfrac{x_m(PO)}{x(OH)*t_m(PO)*OHZ}$ in [g/(1*{mg KOH})] | Aussehen | Anmerkungen |
|---|---|---|---|---|---|---|---|
| 1 | 3,58 | 2,15 | 5,88 | 100 | 0,0028 | klar | |
| 2 | 3,59 | 2,16 | 4,05 | 100 | 0,0041 | klar | |
| 3 | 5,81 | 3,49 | 1,75 | 160 | 0,0058 | klar | |
| 4 | 3,38 | 4,07 | 1,10 | 190 | 0,0040 | klar | |
| 5 | 3,47 | 3,08 | 1,47 | 144 | 0,0053 | klar | |
| 6 (Vergleich) | 3,57 | 2,15 | 1,62 | 100 | 0,0102 | fest | |
| 7 (Vergleich) | 3,58 | 2,15 | 1,75 | 100 | 0,0095 | trüb | |
| 8 (Vergleich) | 14,96 | 3,74 | 3,32 | 213 | 0,0057 | klar | Kein Ethylenoxid verwendet |
| 9 (Vergleich) | 3,57 | 2,16 | 1,80 | 100 | 0,0092 | trüb | |
| 10 (Vergleich) | 3,60 | 2,15 | 1,52 | 99,9 | 0,0110 | fest | |
| 11 (Vergleich) | 19,54 | 2,15 | 5,00 | 100 | 0,0182 | klar | Kein Ethylenoxid verwendet |
| 12 (Vergleich) | 19,54 | 2,15 | 6,80 | 100 | 0,0134 | klar | Kein Ethylenoxid verwendet |
| 13 (Vergleich) | 3,55 | 2,14 | 2,08 | 100 | 0,0080 | klar | Bei Raumtemperatur flüssiger Starter verwendet |
| 14 (Vergleich) | 6,08 | 1,84 | 5,68 | 86,0 | 0,0068 | trüb | |
| 15 (Vergleich) | 7,94 | 1,59 | 6,38 | 74,5 | 0,0105 | trüb | |
| 16 (Vergleich) | 2,70 | 2,25 | 1,20 | 105 | 0,0095 | fest | |

(fortgesetzt)

| Beispiel | $x_m(PO)$ [mol] | $x(OH)$ [mol] | $t_m(PO)$ [h] | ber. OHZ [mg KOH/g] | $\dfrac{x_m(PO)}{x(OH) * t_m(PO) * OHZ}$ in [g/(1*{mg KOH})}] | Aussehen | Anmerkungen |
|---|---|---|---|---|---|---|---|
| 17 (Vergleich) | 15,64 | 2,15 | 6,75 | 101 | 0,0107 | trüb | |

**Patentansprüche**

1. Verfahren zur Herstellung von Polyetherpolyolen auf Basis von Starterverbindungen mit Zerewitinoff-aktiven Wasserstoffatomen, mit n Blöcken $E_n$, jeweils umfassend wenigstens 75 Gew.-% Oxyethyleneinheiten, und m Blöcken $P_m$, jeweils umfassend wenigstens 60 Gew.-% Oxypropyleneinheiten, mit n und m als natürlichen Zahlen von 1 bis 10, wobei bei dem Verfahren wenigstens eine Starterverbindung mit zumindest einem Zerewitinoff-aktiven Wasserstoffatom unter Zusatz eines basischen Katalysators mit Ethylenoxid und Propylenoxid umgesetzt wird, wobei keine Lösungsmittel verwendet werden, und die wenigstens eine Starterverbindung einen Schmelzpunkt von $\geq 40$ °C aufweist,

   **dadurch gekennzeichnet, dass**

   die Umsetzung mit Propylenoxid während der Dosierung des Blockes oder der Blöcke $P_m$ unter den Bedingungen der folgenden Ungleichung erfolgt:

$$\frac{x_m(PO)}{x(OH) * t_m(PO) * OHZ} < 0,0060$$

$$\text{in } [\text{g/(h*\{mg KOH\})}] \quad (1)$$

   wobei

   $X_m(PO)$, als die eindosierte Stoffmenge an Propylenoxid für den Block $P_m$ in mol,
   $x(OH)$, als die Stoffmenge an Hydroxygruppen im Polyetherpolyol in mol,
   $t_m(PO)$, als die Dosierzeit für das Propylenoxid des Blocks $P_m$ in Stunden,
   OHZ, als die berechnete OH-Zahl des Polyetherpolyols in mg KOH/g, und
   m wie vorstehend

   definiert sind,
   und wobei der Gesamtgehalt an Oxyethyleneinheiten im Polyetherpolyol, bezogen auf die Gesamtmasse der eindosierten Alkylenoxide, von 5 bis 90 Gew.-% beträgt.

2. Verfahren gemäß Anspruch 1, **dadurch gekennzeichnet, dass** der oder die Blöcke $P_m$ wenigstens 75 Gew.-% Oxypropyleneinheiten, bezogen auf die Gesamtmasse der für diesen oder diese Blöcke eindosierten Alkylenoxide, enthalten.

3. Verfahren gemäß einem der vorstehenden Ansprüche, **dadurch gekennzeichnet, dass** die Polyetherpolyole bis zu 85 Gew.-% Oxyethyleneinheiten, bezogen auf die Gesamtmasse der eindosierten Alkylenoxide, enthalten.

4. Verfahren gemäß einem der vorstehenden Ansprüche, **dadurch gekennzeichnet, dass** mindestens ein Block $E_n$ wenigstens 90 Gew.-% Oxyethyleneinheiten enthält.

5. Verfahren gemäß einem der vorstehenden Ansprüche, **dadurch gekennzeichnet, dass** ein Block $E_n$ ein Endblock ist.

6. Verfahren gemäß einem der vorstehenden Ansprüche, **dadurch gekennzeichnet, dass** die berechnete OH-Zahl der Polyetherpolyole von 50 mg KOH / g bis 400 mg KOH / g beträgt.

7. Verfahren gemäß einem der vorstehenden Ansprüche, **dadurch gekennzeichnet, dass** die Polyetherpolyole neben den auf den Starter zurückgehenden Struktureinheiten ausschließlich aus den Blöcken $E_n$ und $P_m$ bestehen.

8. Verfahren gemäß einem der vorstehenden Ansprüche, **dadurch gekennzeichnet, dass** zumindest eine weitere Starterverbindung mit einem Schmelzpunkt < 40 °C in einem Anteil bis zu 30 Gew.-%, bezogen auf die Gesamtmasse aller Starterverbindungen, eingesetzt wird.

9. Verfahren gemäß einem der vorstehenden Ansprüche, **dadurch gekennzeichnet, dass** der Katalysator in einer auf die Endproduktmenge bezogenen Konzentration von 0,004 bis 1,0 Gew.-% verwendet wird, insbesondere von 0,05 bis 1,0 Gew.-%.

**10.** Verfahren gemäß einem der vorstehenden Ansprüche, **dadurch gekennzeichnet, dass** als Katalysator Kaliumhydroxid eingesetzt wird.

**11.** Verfahren gemäß einem der vorstehenden Ansprüche, **dadurch gekennzeichnet, dass** die Umsetzung der wenigstens einen Starterverbindung mit Ethylenoxid und Propylenoxid bei einer Temperatur von 70 bis 170 °C erfolgt, insbesondere von 100 bis 160 °C.

**12.** Verfahren gemäß einem der vorstehenden Ansprüche, **dadurch gekennzeichnet, dass** als Starterverbindung Pentaerythrit, Saccharose, Trimethylolpropan und / oder Sorbit eingesetzt werden.

**Claims**

**1.** Process for preparing polyether polyols based on starter compounds having Zerevitinov-active hydrogen atoms, having n $E_n$ blocks each comprising at least 75% by weight of oxyethylene units, and m $P_m$ blocks each comprising at least 60% by weight of oxypropylene units, where n and m are each natural numbers from 1 to 10, at least one starter compound having at least one Zerevitinov-active hydrogen atom being reacted in the process with ethylene oxide and propylene oxide with addition of a catalyst, without using a solvent, and the at least one starter compound having a melting point of $\geq 40°C$,
**characterized in that**
the reaction with propylene oxide is effected during the metered addition of the $P_m$ block(s) under the conditions of the following inequation:

$$\frac{x_m(PO)}{x(OH) * t_m(PO) * OHZ} < 0.0060$$

in [g/(h*{mg KOH})] (1)

where

$x_m(PO)$ is defined as the molar amount of propylene oxide metered in for the $P_m$ block in mol,
$x(OH)$ is defined as the molar amount of hydroxyl groups in the polyether polyol in mol,
$t_m(PO)$ is defined as the metering time for the propylene oxide of the $P_m$ block in hours,
OHZ is defined as the calculated OH number of the polyether polyol in mg KOH/g, and
m is as defined above,

and where the total content of oxyethylene units in the polyether polyol, based on the total mass of the alkylene oxides metered in, is from 5 to 90% by weight.

**2.** Process according to Claim 1, **characterized in that** the $P_m$ block comprises or the $P_m$ blocks comprise at least 75% by weight of oxypropylene units, based on the total mass of the alkylene oxides metered in for this block or these blocks.

**3.** Process according to either of the preceding claims, **characterized in that** the polyether polyols contain up to 85% by weight of oxyethylene units, based on the total mass of the alkylene oxides metered in.

**4.** Process according to any of the preceding claims, **characterized in that** at least one $E_n$ block contains at least 90% by weight of oxyethylene units.

**5.** Process according to any of the preceding claims, **characterized in that** one $E_n$ block is an end block.

**6.** Process according to any of the preceding claims, **characterized in that** the calculated OH number of the polyether polyols is from 50 mg KOH/g to 400 mg KOH/g.

**7.** Process according to any of the preceding claims, **characterized in that** the polyether polyols, aside from the structural units originating from the starter, consist exclusively of the $E_n$ and $P_m$ blocks.

**8.** Process according to any of the preceding claims, **characterized in that** at least one further starter compound having a melting point < 40°C is used in a proportion of up to 30% by weight based on the total mass of all starter compounds.

**9.** Process according to any of the preceding claims, **characterized in that** the catalyst is used in a concentration, based on the amount of end product, of 0.004 to 1.0% by weight, especially of 0.05 to 1.0% by weight.

**10.** Process according to any of the preceding claims, **characterized in that** the catalyst used is potassium hydroxide.

**11.** Process according to any of the preceding claims, **characterized in that** the reaction of the at least one starter compound with ethylene oxide and propylene oxide is effected at temperature of 70 to 170°C, especially of 100 to 160°C.

**12.** Process according to any of the preceding claims, **characterized in that** the starter compound used is pentaerythritol, sucrose, trimethylolpropane and/or sorbitol.

**Revendications**

**1.** Procédé de préparation de polyétherpolyols à base de composés de départ contenant des atomes d'hydrogène actifs selon Zerewitinoff, comportant n blocs $E_n$, comprenant chacun au moins 75 % en poids de motifs oxyéthylène, et m blocs $P_m$, comprenant chacun au moins 60 % en poids de motifs oxypropylène, n et m étant des nombres entiers de 1 à 10, procédé dans lequel au moins un composé de départ, comportant au moins un atome d'hydrogène actif selon Zerewitinoff, est mis à réagir, avec addition d'un catalyseur basique, avec de l'oxyde d'éthylène, ainsi que de l'oxyde de propylène, aucun solvant n'étant utilisé, et le ou les composés de départ présentent un point de fusion $\geq$ 40°C,
**caractérisé en ce que**
la réaction avec l'oxyde de propylène a lieu pendant le dosage du bloc ou des blocs $P_m$, dans les conditions correspondant à l'inéquation suivante :

$$\frac{x_m(PO)}{x(OH) * t_m(PO) * OHZ} < 0,006$$

$> 2,9$ , en [g/(h*{mg KOH})] (1)

dans laquelle

$x_m(PO)$ est défini comme étant la quantité de matière dosée d'oxyde de propylène pour le bloc $P_m$, en moles,
$x(OH)$ est défini comme étant la quantité de matière de groupes hydroxy dans le polyétherpolyol, en moles,
$t_m(PO)$ est défini comme étant le temps de dosage pour l'oxyde de propylène du bloc $P_m$, en heures,
OHZ est défini comme étant l'indice OH du polyétherpolyol, en mg KOH/g, et
m est tel que défini ci-dessus,

et dans lequel la teneur totale du polyétherpolyol en motifs oxyéthylène, rapportée à la masse totale des oxydes d'alkylène dosés, est de 5 à 90 % en poids.

**2.** Procédé selon la revendication 1, **caractérisé en ce que** le bloc ou les blocs $P_m$ contiennent au moins 75 % en poids de motifs oxypropylène, par rapport à la masse totale des oxydes d'alkylène dosés pour ce ou ces blocs.

**3.** Procédé selon l'une des revendications précédentes, **caractérisé en ce que** les polyétherpolyols contiennent jusqu'à 85 % en poids de motifs oxyéthylène, par rapport à la masse totale des oxydes d'alkylène dosés.

**4.** Procédé selon l'une des revendications précédentes, **caractérisé en ce qu'**au moins un bloc $E_n$ contient au moins 90 % en poids de motifs oxyéthylène.

**5.** Procédé selon l'une des revendications précédentes, **caractérisé en ce qu'**un bloc $E_n$ est un bloc terminal.

**6.** Procédé selon l'une des revendications précédentes, **caractérisé en ce que** l'indice d'OH calculé des polyétherpolyols est de 50 mg KOH/g à 400 mg KOH/g.

**7.** Procédé selon l'une des revendications précédentes, **caractérisé en ce que** les polyétherpolyols sont constitués, en plus des motifs structuraux qui remontent au composé de départ, exclusivement des blocs $E_n$ et $P_m$.

**8.** Procédé selon l'une des revendications précédentes, **caractérisé en ce qu'**au moins un composé de départ supplémentaire est utilisé, présentant un point de fusion < 40°C, selon une proportion allant jusqu'à 30 % en poids par rapport à la masse totale de tous les composés de départ.

**9.** Procédé selon l'une des revendications précédentes, **caractérisé en ce que** le catalyseur est utilisé en une concentration, rapportée à la quantité du produit final, de 0,004 à 1,0 % en poids, en particulier de 0,05 à 1,0 % en poids.

**10.** Procédé selon l'une des revendications précédentes, **caractérisé en ce que** l'hydroxyde de potassium est utilisé comme catalyseur.

**11.** Procédé selon l'une des revendications précédentes, **caractérisé en ce que** la réaction du ou des composés de départ avec de l'oxyde d'éthylène, ainsi que de l'oxyde de propylène, est réalisée à une température de 70 à 170°C, en particulier de 100 à 160°C.

**12.** Procédé selon l'une des revendications précédentes, **caractérisé en ce qu'**on utilise en tant que composé de départ du pentaérythritol, du saccharose, du triméthylolpropane et/ou du sorbitol.

EP 2 770 010 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4332936 A
- FR 1285708 A
- US 3190927 A
- DE 1443022 A
- US 4430490 A
- EP 2028211 A
- WO 2009152954 A
- WO 2011039145 A
- WO 2009106244 A
- WO 9820061 A
- US 2004167316 A

- US 4521548 A
- DE 10024313 A
- RO 118433
- US 4507475 A
- EP 0693513 A
- EP 1751213 A
- WO 0114456 A
- JP 6157743 A
- WO 9620972 A
- US 3823145 A

**In der Beschreibung aufgeführte Nicht-Patentliteratur**

- **M. IONESCU et al.** *Advances in Urethanes Science and Technology,* 1998, vol. 14, 151-218
- Ullmann's Encyclopedia of Industrial Chemistry. 1992, vol. B4, 167ff

- Handbuch Apparate. Vulkan-Verlag Essen, 1990, 188-208